# EUROPEAN PATENT APPLICATION

(11) **EP 1 061 716 A2**
(43) Date of publication of application: **20.12.2000**
(21) Application number: 00112377.7
(22) Date of filing: 09.06.2000
(51) Int. Cl.: H04M 1/274, H04M 1/725, H04M 11/04

(54) **Emergency calling function of portable communication device**

(30) Priority: 14.06.1999 JP 16630299; 18.02.2000 JP 2000041854
(71) Applicant: MITSUBISHI DENKI KABUSHIKI KAISHA, Tokyo 100-8310 (JP)
(72) Inventor: Urakawa, Yasutaka, c/o Mitsubishi Denki K. K., Tokyo 100-8310 (JP)
(74) Representative: Pfenning, Meinig & Partner GbR

(57) **Abstract**

An emergency telephone number table in an internal memory stores emergency telephone numbers in respective countries, accompanied by corresponding country flags so that the countries where the respective emergency telephone numbers are usable can be identified. When an input emergency telephone number is stored in the emergency call memory means, accompanied by country information coincident with usable country information, the calling processing section dials the input emergency telephone number. However, when such an emergency telephone number is not stored, the calling processing section searches an emergency telephone number table, and dials an emergency telephone number which corresponds to the specified emergency telephone number and is accompanied by the appropriate country information. With this arrangement, a user without the knowledge of emergency telephone numbers in a country other than his own country can still make an emergency call in a country other than his own country.

## Description

### BACKGROUND OF THE INVENTION

### 1. Field of the Invention:

The present invention generally relates to a portable communication device, and particularly to a portable communication device allowing a user without knowledge of emergency telephone numbers other than those of his own country to place an emergency call in another country.

### 2. Description of the Related Art:

Communication devices, such as portable telephone devices and portable information terminals having a telephone communication function, generally have a memory dial function. A memory dial function is a function for storing and retrieving a name and telephone number of a communication destination party from an internal memory, referred to as an electronic telephone book or an address book, allowing the user to place a call by merely selecting the name of a party he wishes to call from a name list shown on the LCD of a portable telephone device. The user need not actually dial the number.

Because there is no uniform communication format usable for worldwide radio telephone systems, a portable telephone device for use, for example, in Japan may not be used as is in the United States, where a different communication format is adopted. However, telephone devices employing an exchangeable RF (radio frequency) module for attachment to the device body have recently begun to be marketed. The body of such a telephone device for use, for example, in Japan can also be used in the U.S. by simply exchanging of its RF module with the one for use in the U.S. Portable telephone devices based on conventional integral-type portable telephone devices incorporating a plurality of radio methods are also available today and the future will bring portable telephone devices usable in two or more countries, when W-CDMA (Wideband Code Division Multiple Access) and other worldwide standard formats for next generation portable telephone devices are put into practicable use.

When the main body of a certain telephone device becomes usable in two or more countries, address data stored in the internal memory of the device body will be available for use in and out of Japan.

A Japanese person in the U.S. wishing to call the police may only know the Japanese police emergency number, "110", and may not know the corresponding U.S. number, "911". In an emergency, he may even dial "110" in the U.S., especially if he is under stress or distraught.

However, a user without the knowledge of emergency telephone numbers in a country where he uses the telephone device cannot make an emergency call because a conventional portable telephone device is not equipped with a function for automatic conversion of an input emergency telephone number to a corresponding one in the country where the telephone device is being used.

### SUMMARY OF THE INVENTION

The present invention has been conceived to overcome the above problems and aims to provide a portable communication device allowing a user without the knowledge of emergency telephone numbers other than his own country, to make an emergency call outside his own country.

In order to achieve the above objects, according to the present invention there is provided a portable communication device for communication via a connected telephone circuit, comprising: emergency number memory means for storing an emergency telephone number and corresponding country information for each emergency call destination; usable country information identifying means for identifying the country to whose telephone circuit the portable communication device is connected; and calling processing means for automatically converting, as needed, an emergency telephone number input by a user into a corresponding emergency telephone number of the country wherein the portable communication device is connected, with reference to the emergency number memory means.

The calling processing means dials an input emergency telephone number when the input emergency telephone number is stored in the emergency call memory means accompanied by country information coincident with usable country information identified by the usable country information identifying means, and, when the input emergency telephone number is stored in the emergency call memory means and not accompanied by usable country information as identified by the usable country information identifying means, specifies, with reference to the emergency number memory means, an emergency telephone number coincident with the input emergency telephone number and which is stored in the emergency call memory accompanied by country information different from the usable country information, and then dials an emergency telephone number which corresponds to the specified emergency telephone number stored in the emergency call memory accompanied by the usable country information.

The above portable communication device is a portable telephone device.

According to the present invention, a user without knowledge of an emergency telephone number in a country other than his own country can make an emergency call in another country by dialing the corresponding number employed in his country.

### BRIEF DESCRIPTION OF THE DRAWINGS

The above and the other objects, features, and advantages of the present invention, will become further apparent from the following description of the preferred embodiment taken in conjunction with the accompanying drawings wherein:
Fig. 1 is a schematic diagram showing a general structure of a portable communication device of one preferred embodiment of the present invention in the form of a portable telephone device;
Fig. 2 is a block diagram showing a structure of the portable telephone device of Fig. 1;
Fig. 3 is a conceptual diagram showing a structure of internal data stored in an internal memory according to the first preferred embodiment;
Fig. 4 is a diagram showing transition of screen images being displayed during an operation for registration in an address book according to the first preferred embodiment;
Fig. 5 is a flowchart of calling processing according to the first preferred embodiment;
Fig. 6 is a diagram showing an operation procedure for making a call using a memory dial function according to the first preferred embodiment;
Fig. 7 is a diagram showing an operation procedure for making a call using a memory dial function according to the first preferred embodiment; and
Fig. 8 is a conceptual diagram showing a structure of internal data stored in an internal memory according to the second preferred embodiment.

### DESCRIPTION OF THE PREFERRED EMBODIMENTS

### Embodiment 1.

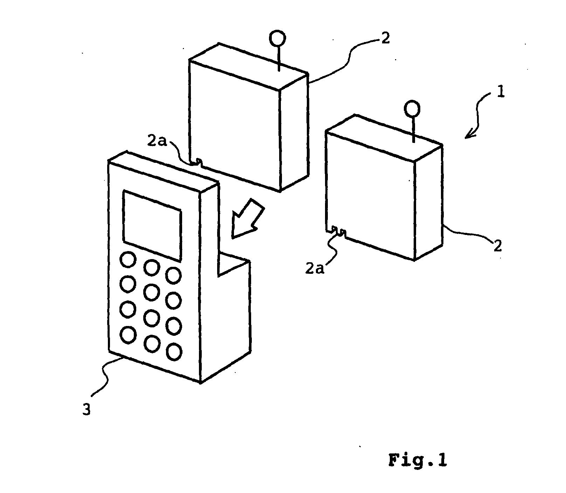

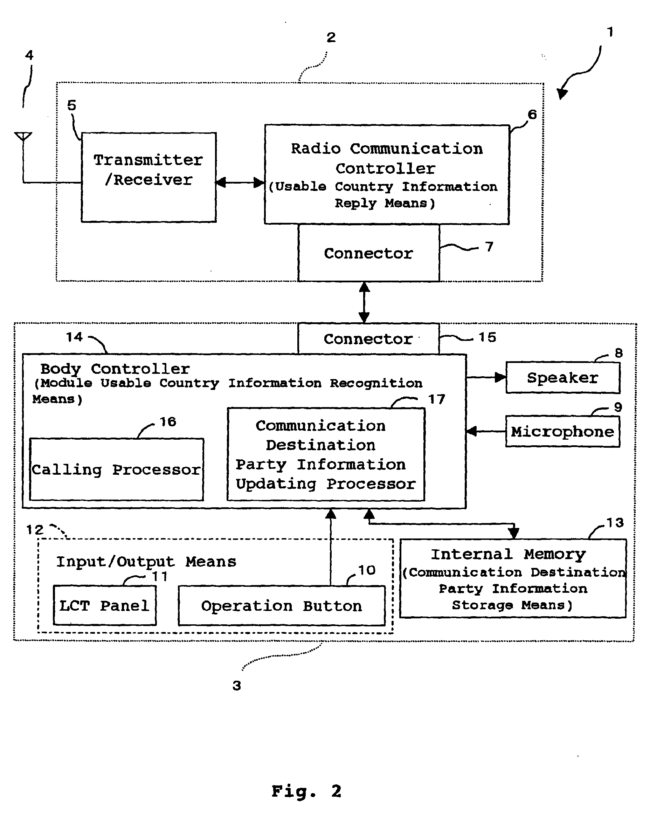

Fig. 1 is a schematic diagram showing a general structure of a portable communication device according to one preferred embodiment of the present invention in the form of a portable telephone device. Fig. 2 is a block diagram showing a structure of the portable telephone device. A portable telephone device 1 in this embodiment comprises a radio communication module (hereinafter referred to as an RF module) 2 for connecting to a radio circuit, and a telephone device body 3 for connection with the RF module 2. The RF module 2 comprises a transmitter/receiver 5 for transmission and reception of a message via an antenna 4 with respect to a base station (not shown), a radio communication controller 6 for radio communication control according to the communication systems determined in each country, and a connector 7 for connection with the telephone device body 3. The RF module 2 is formed detachable from the telephone device body 3. Fig. 1 shows two different types of RF modules 2, one for use in Japan and the other for use in the U.S.

The telephone device body 3 comprises a speaker 8, a microphone 9, an input/output means 12 having an operation button 10 and an LCD panel 11, an internal memory 13 for storing an address book and so on, a body controller 14 for controlling overall function of the portable telephone device 1, and a connector 15 for connection with the RF module 2. The body controller 14 includes a calling processor 16 and a communication destination party information updating processor 17. The calling processor 16 puts through a call to a communication destination party selected from a list displayed on the LCD panel 11. The communication destination party information updating processor 17, serving as a communication destination party information registration means, prepares communication destination party information based on the data on a communication destination party, a subscriber number, and a communication destination country, the data being input through operation of the operation button 10 according to the guidance shown in the LCD panel 11. The updating processor 17 is responsible also for registration, updating, and deletion of communication destination party information.

In order to place a call from a portable telephone device 1 using a memory dial function, the user presses the operation button 1 to display the list of communication destination candidate parties on the LCD panel 11, and selects the party he wishes to call from the list. Then, the calling processor 16 retrieves and displays names of communication destination candidate parties from the internal memory 13 in response to the user's input operation, and, once the user inputs a selection, retrieves the telephone number of the selected party from the internal memory 13 to prepare a call setting request to be sent to the RF module 2. Note that sending a call setting request constitutes putting through a call. The RF module 2 forwards the call setting request, as prepared by the body controller 14, to the base station for establishment of a radio connection line according to a predetermined procedure.

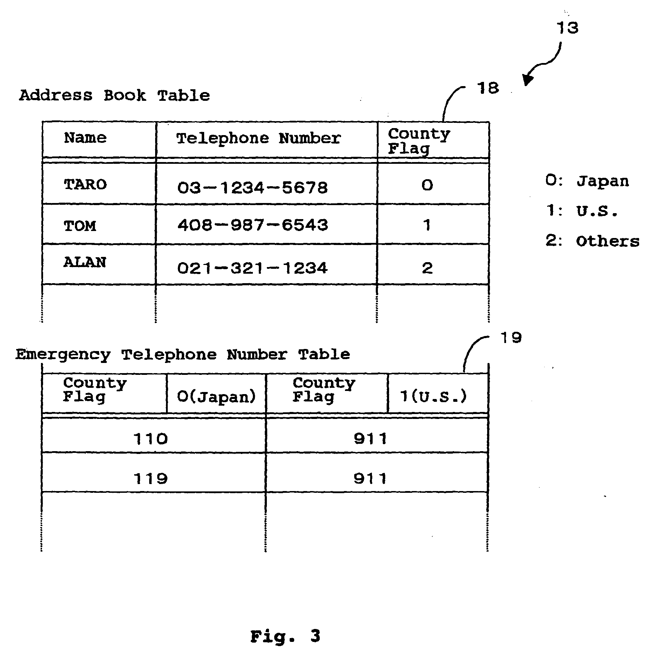

Fig. 3 is a schematic diagram showing a structure of internal data stored in the internal memory 13 in this embodiment. The internal memory 13 stores, as a communication destination party information storage means, information concerning communication destination candidate parties, and stores, as an emergency telephone number storage means, emergency telephone numbers employed in respective countries where the portable telephone device 1 is expected to be used in a manner such that relevant numbers for the respective countries are shown corresponding to one another. The address book table 18 of Fig. 3, corresponding to the communication destination party information storage means, stores data on the name and telephone number of a communication destination candidate party together with a corresponding country flag. A country flag, which is a characteristic feature of this embodiment, is country identification flag information, i.e., information indicative of a country where the communication destination candidate party is present, in other words, a country to which circuit connection can be established when each telephone number registered in the address book table 18 is dialed. In the example of Fig. 3, "0" stands for Japan, "1" for the U.S., and "2" for others. Note that, differing from the above example with three flag groups, each for Japan, the U.S., and others, it is of course possible to prepare an additional identification flag uniquely assigned to a country other than Japan and the U.S., or to impart a different value to each country. Further, communication destination party identification information may include any information, besides the names exemplified in this embodiment, i.e., TARO and TOM, which are names which the user may generally use for registration in the address book, such as an individual name, a company name, and a nickname, which can discriminate a communication destination party to make it identifiable for the user of the portable telephone device 1.

The emergency telephone number table 19 is a table listing emergency telephone numbers, such as those for police or fire services, used in respective countries in such a manner that relevant telephone numbers for the respective countries are shown corresponding to one another.

This embodiment is characterized by the fact that each telephone number is registered together with a country flag in the address book table 18 so that, when the user places a call with a portable telephone device 1 using a memory dial function, the country where the user is using the portable telephone device 1 is automatically identified to be compared with the country where the communication destination party is present, and the telephone number registered in the address table 18 is dialed either intact or after automatically dialing any additional number, such as a country code, depending on whether or not the two countries are the same. With this arrangement, the user can place a call using the memory dial function using the same procedure, regardless of the country in which he uses the portable telephone device 1.

Next, an operation of this embodiment will be described, beginning with an operation for registration in an address book, followed by that for making a call.

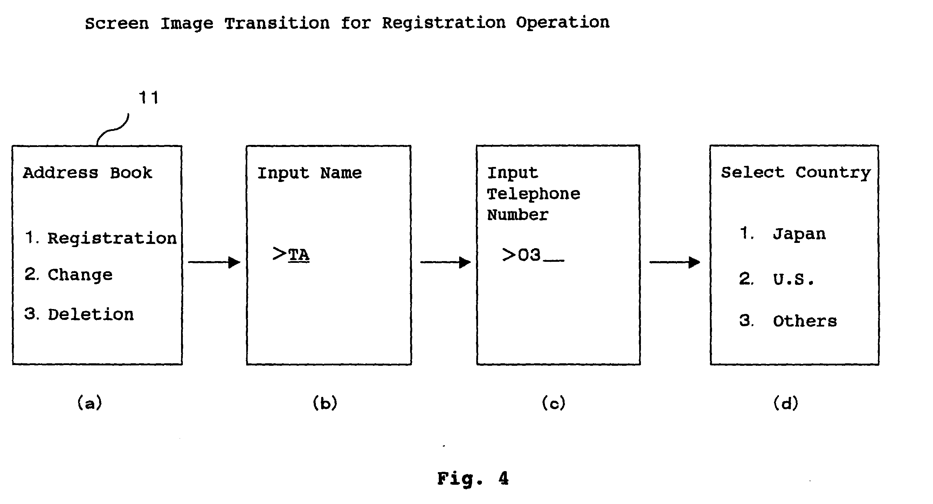

In response to the user's predetermined button operation, the communication destination party information updating processor 17 displays an address book registration screen image (a) on the LCD panel 11, as shown in Fig. 4. When "1. Registration" is selected by the user, the communication destination party information updating processor 17 then displays input screen images (b) and (C) in order to guide the user to input data on the name and telephone number of a communication destination candidate party. subsequently, the communication destination party information updating processor 17 displays a selection screen image (d) to guide the user to select an appropriate country. Having received input data on the name, telephone number, and country of each communication destination candidate party, the communication destination party information updating processor 17 correlates the data on the respective items to one another to prepare communication destination party information, and registers the resultant information in the address book table 18. Note that the object of registration in the address book is to obtain data on the name and telephone number of and a country flag for a communication destination candidate party. A registration procedure is thus not limited to the above.

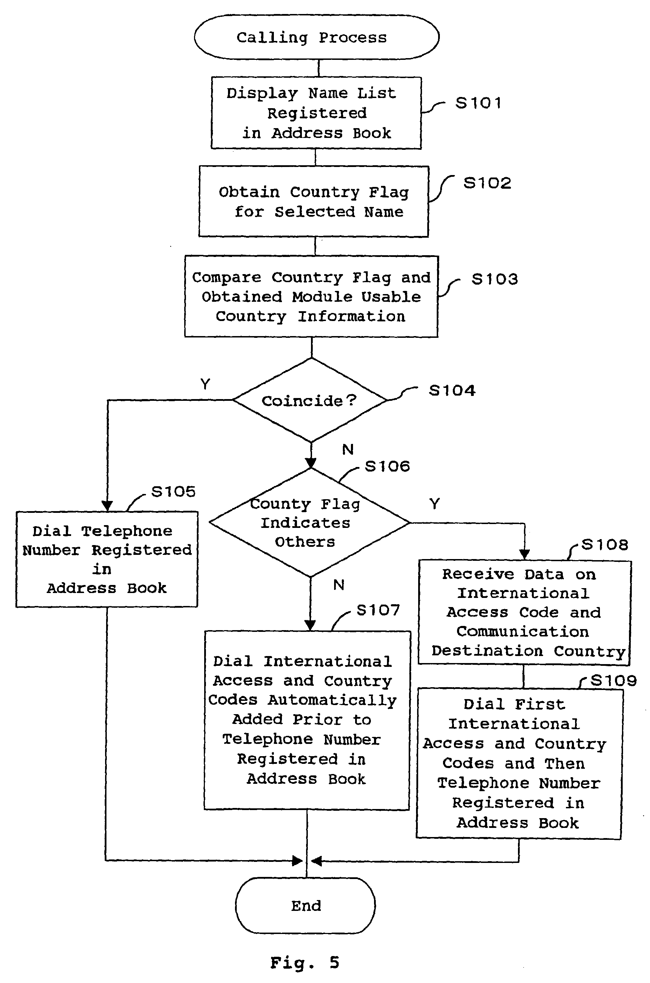

An operation for making a call in this embodiment will be described referring to the flowchart of Fig. 5, beginning with a call within the same country, i.e., a case where the user of a portable telephone device 1 in Japan places a call to TARO in Japan. A call within the same country is referred to as a domestic call.

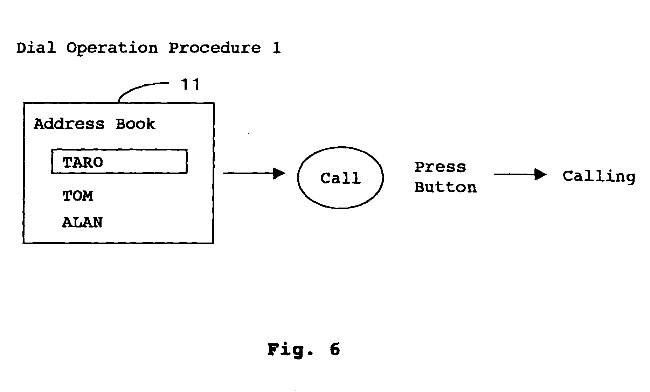

The user carries out a predetermined button operation using a memory dial function to display the names registered in the address book table 18 in the form of a list as shown in Fig. 6 (step 101). After the user's selection of TARO from among the displayed names and application of a call operation by pressing a call button, the calling processor 16 retrieves the country flag data for TARO, i.e., "0", from the address book table 18 (step 102). The calling processor 16 then compares the retrieved country flag data and module usable country information, obtained from the RF module 2 (step 103).

Module usable country information indicates a country where the RF module 2 attached to the telephone device body 3 is able to perform radio communication, or a country which adopts a communication system allowing the RF module 2 to perform radio communication. In this embodiment, in response to an inquiry from the body controller 14 of the telephone device body 3, the radio communication controller 6 of the RF module 2 sends module usable country information by outputting, for example, data "0" indicating that the attached RF module 2 is configured for use in Japan, and data "1" for use in the U.S. The body controller 14 sends an inquiry when the RF module 2 is attached to the body controller 14, and internally stores the received reply. Note that this embodiment requires a proper RF module 2 usable in a country where the user uses the associated portable telephone device 1, correctly attached to the telephone device body 3 by the user.

In Step 103, since comparison proves that the country flag "0" for TARO'' coincides with the module usable country information "0" supplied from the RF module 2, the calling processor 16 directly dials the telephone number registered in the address book table 18 (Steps 104, 105).

Next, a case where a user in Japan places a call to TOM in the U.S. will be described. A call to a party overseas is referred to as an international call.

The user carries out a predetermined button operation using a memory dial function to display the names registered in the address book table 18 in the form of a list as shown in Fig. 6 (step 101). After the user's selection of TOM from among the displayed names and application of a call operation by pressing a call button, the calling processor 16 retrieves country flag data for TOM, i.e., "1", from the address book table 18 (step 102). Then, the calling processor 16 compares the retrieved country flag data and module usable country information, obtained from the RF module 2 (step 103). Processing thus far is identical to that for a domestic call.

In this example, however, as the RF module 2 attached to the telephone device body 3 is one for use in Japan, the country flag for TOM "1" does not coincide with the module usable country information "0". Therefore, the calling processor 16 first dials an international access code for specifying an international telephone company, and a country code, and then the telephone number registered in the address book table 18 (steps 104, 105, 106). Note that, in this embodiment, as an international access code is initially set in the portable telephone device 1 and stored in the internal memory 13, designation of an international access code is unnecessary.

The above process is also applied when a user in the U.S. makes an international call on the portable telephone device 1 to TARO in Japan. That is, an international access code and a country code are automatically added, in dialing, to the number registered in the address book table 18 with omission of the leading "0" of the area code.

As described above, in this embodiment, when the user makes a call to a specific communication destination party using a memory dial function, and that call is an international call, an international access code and a country code are automatically dialed prior to the dialing of the registered telephone number. Therefore, the user can make all calls using the same calling procedure shown in Fig. 6, regardless as to whether the dialed party is located in or out of the country where the user is calling from.

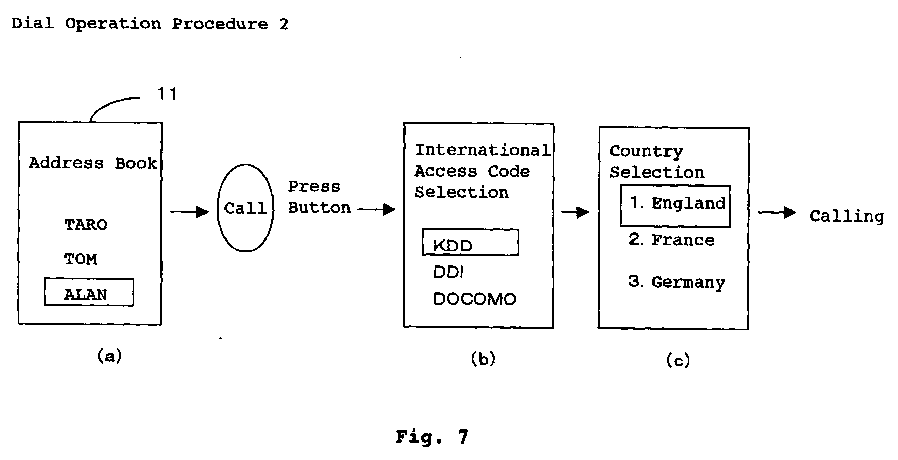

Here, when the user of the portable telephone device 1 in Japan makes an international call to ALAN in any country other than Japan or the U.S., the user selects ALAN from the list displayed on the LCD panel 11, as shown in Fig. 7, and presses down the calling button. Country flag data for ALAN, which indicates "2", is thereupon retrieved from the address book table 18 (Steps 101, 102). Through comparison between the retrieved country flag data for ALAN and the module usable country information obtained from the RF module 2, it is known that they do not coincide to each other and that the country flag for ALAN, or "2", represents other countries (steps 103, 104, 106). In this case, as a country code, necessary for making an international call, is unknown, the calling processor 16 displays a screen image on the LCD panel 11 to encourage the user to select the country of the communication destination party and an international telephone company. The calling processor 16 receives input data on the user's selection of the company and country (step 108), and then internally converts the data into an international access code and a country code for preparation of an international telephone number for ALAN in a form used in the call destination country (Step 109). The preparation is achieved through addition of the converted international and country codes prior to ALAN's registered telephone number and other modification, if necessary, such as omission of the leading "0" of the area code.

Note that an international access code and a country code may be directly input, or an international telephone company may also be fixed for every communication destination party or country, rather than being selected from a list displayed on the LCD panel 11, as shown in Fig. 7, which is described in the above only as an example of one method for specifying international access and country codes. Also, an international access code, which is initially set in the above example with a call from a caller in Japan to Tom in the U.S., may instead be set for selection for every call via the selection screen image shown in Fig. 7. Ordinarily, a portable telephone device may be provided with a mode setting function for selecting the above modes for specifying an international access code, rather than employing just one of the above described international access code selection methods.

Here, an emergency telephone number table 19 is provided in the internal memory 13 in this embodiment, which is used as follows.

A Japanese person wishing to call the police in the U.S. may know only the Japanese police emergency number, "110", and may not know the corresponding U.S. number, "911". In an emergency, he may even dial "110" in the U.S., especially if he is under stress or distraught.

In order to deal with such a situation, operation of this embodiment will be performed as follows.

The calling processor 16 initially detects whether or not the dialed emergency number is registered in an emergency telephone number table 19 with a country flag indicative of the country indicated by the module usable country information obtained from the RF module 2. If it is registered, the calling processor 16 puts through a call in the dialed telephone number intact. This process corresponds to a case where a U.S. emergency number, e.g., 911, is dialed in the U.S.

On the other hand, if the dialed number is not registered, the calling processor 16 then checks emergency telephone numbers registered in emergency telephone number tables 19 with country flags indicative of countries other than that which is indicated by the module usable country information. When the dialed number is found in any of the tables 19, the calling processor 16 then converts the dialed telephone number into a corresponding telephone number included in the table 19 for the country of the module usable country information.

Specifically, when "110", or a Japanese emergency telephone number, is dialed in the U.S., the calling processor 16 finds that "110" is not registered in the emergency telephone number table 19 with the country flag "1", identical to the module usable country information, obtained from the RF module 2. The calling processor 16 then checks an emergency telephone number table 16 for a country flag "0", different from the module usable country information "1", and finds "110" in that table 19. Therefore, the calling processor 16 converts "110" into a corresponding emergency telephone number, or "911", included in the table 19 for the country indicated by the module usable country information "1".

As described above, in this embodiment, a user located in a country other than his home country and without knowledge of emergency telephone numbers of the country he is in, can still make an emergency call on the portable telephone device 1 by dialing a corresponding emergency number of his country. It should be noted that, in the case where a person from a country, such as the U.S., which adopts a single telephone number for police and fire emergencies, dials "911" in Japan, the calling processor 16 must convert the dialed "911" into either "110" or "119". For conversion, the calling processor 16 may either automatically select "110" or "119", or display an inquiry message on the LCD panel to encourage the user's selection.

In this embodiment, the telephone device body 3 can ascertain in which country the RF module 2 attached thereto is usable, by referring to a reply containing module usable country information, supplied from the radio communication controller 6 of the RF module 2 in response to an inquiry from the body controller 14. That is, the body controller 14 of this embodiment is informed of module usable country information through receipt of a reply from the RF module 2, i.e., by means of software. Differing from the above, the body controller 14 may be informed of the information by hardware means. Specifically, an RF module 2 may be formed having a part for connection with the telephone device body 3, which is differently shaped for every country where the RF module 2 is used, and the telephone device body 3 may be formed having a hardware structure as a module usable country information recognition means for recognizing the peculiar shape of the connection part of the RF module 2 attached to the body 3. For example, as shown in Fig. 1, a recess in the form of a slot, a notch, or the like, may be formed in the connection part of the RF module 2 so as to have a different arrangement, depth, or length, or a different number of slots are formed, depending on countries, and the module usable country information recognition means, provided to the telephone device body 3, can detect characteristics of the shape of each recess for understanding of module usable country information.

Also, an RF module for a plurality of radio communication systems is available. A radio communication controller 6 of such an RF module 2 may initially communicate with the base station via radio to specify a communication system for use, and then supply module usable country information corresponding to the specified communication system to the body controller 14. Further, an RF module capable of radio communication in world-common communication system has recently been standardized. A radio communication controller 6 of such an RF module initially communicates via radio with a base station to specify country and positional information, and then supplies module usable country information corresponding to the specified country and positional information to the body controller 14. Still further, when a portable telephone device 1 is used in only limited countries, e.g., only in Japan and the U.S., a telephone number for use in Japan and that in the U.S. can be discriminated depending on the presence or absence of "0" at the top of each telephone number. Therefore, it is unnecessary to register a country flag in the address book table 18 as the first number of each telephone number serves equivalent to a country flag.

### Embodiment 2.

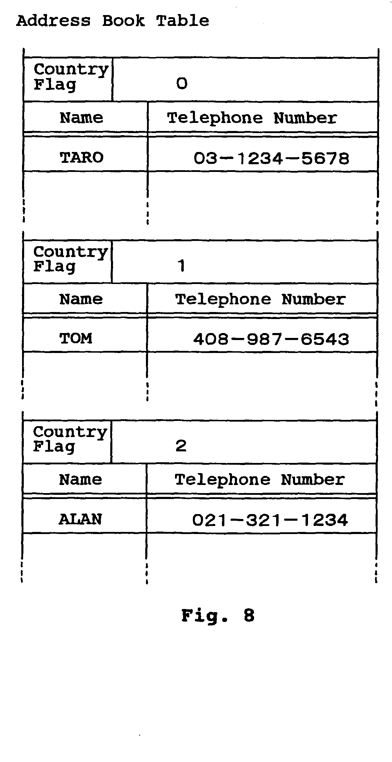

Fig. 8 is a schematic diagram showing a structure of internal data stored in the internal memory 13 in this embodiment. Different from the first example, in which a country flag is correspondingly attached to each telephone number for registration in the internal memory 13, in this embodiment, an entry region may be provided in the internal memory 13, as shown in Fig. 8, so that telephone numbers with the same destination countries can be collectively registered in a corresponding entry region. Further, data on a communication destination candidate party may be added for registration in the entry region for the country where the party is present. Here, a grouping function, for example, which is available on a portable telephone device supplied by NTT IDO TSUSHINMOU K.K., can be effectively utilized when a group number is used as a country flag.

Note that a telephone number may be registered in the form of an international telephone number so that it can also be used for a domestic call with omission of international and country codes, differing from the above in which domestic telephone numbers may be registered in the internal memory 13.

Also note that the present invention can be applied, to not only the above example of a portable telephone device, but also to a mobile computer equipped with a telephone function as a portable communication device capable of radio communication. The present invention can also be applied to a portable communication device adapted to use as being wired to a telephone line. In such a case, a communication module for application to a mobile computer can be achieved using a PC card attachable to a mobile computer. Also, the calling processing, depicted in Fig. 5, can be applied to a communication device which is not a portable type.

In the above, for brevity of explanation, it was described that an international call can be made by dialing an international telephone number, or, specifically, by first dialing international access and country codes and then a domestic telephone number. However, presently, international calls cannot normally be directly made on a portable telephone device 1. Therefore, in actuality, dialing an international telephone number, prepared by adding international and country codes prior to a domestic telephone number, as described above, cannot establish a line connection for an international call.

Even so, the present invention is characterized by a structure capable of automatic discrimination between domestic and international calls, and of dialing either a registered telephone number intact for a domestic call or an international telephone number prepared based on the registered telephone number through automatic modification given thereto such as addition of any required number, e.g., a country code, or omission of any unnecessary number. For example, when using WORLD CALL service, offered by NTT IDO TSUSHINMOU K.K., "0091-30" may be automatically dialed in place of international and country codes to establish a connection, and then followed by dialing a tone signal (DTMF tone, push tone), a country code, a registered telephone number, and "#" key sound. Of course, when it becomes possible to directly place an international call using a portable telephone device 1 in the future, the above described process can be applied without such or similar modification.

## Claims

1. A portable communication device for communication via a connected telephone circuit, comprising:
emergency number memory means for storing an emergency telephone number and corresponding country information for each emergency call destination;
usable country information identifying means for identifying the country to whose telephone circuit the portable communication device is connected; and
calling processing means for automatically converting, as needed, an emergency telephone number input by a user into a corresponding emergency telephone number of the country wherein the portable communication device is connected, with reference to the emergency number memory means.

2. A portable communication device according to claim 1, wherein
the calling processing means dials an input emergency telephone number when the input emergency telephone number is stored in the emergency call memory means accompanied by country information coincident with usable country information identified by the usable country information identifying means, and, when the input emergency telephone number is stored in the emergency call memory means and not accompanied by usable country information as identified by the usable country information identifying means, specifies, with reference to the emergency number memory means, an emergency telephone number coincident with the input emergency telephone number and which is stored in the emergency call memory accompanied by country information different from the usable country information, and then dials an emergency telephone number which corresponds to the specified emergency telephone number stored in the emergency call memory accompanied by the usable country information.

3. A portable communication device according to claim 1 is as a portable telephone device.
